(19) **Europäisches Patentamt**

**European Patent Office**

**Office européen des brevets**

(11) **EP 1 239 311 A1**

(12) **EUROPEAN PATENT APPLICATION**

(43) Date of publication:
**11.09.2002 Bulletin 2002/37**

(51) Int Cl.⁷: **G02B 6/125**

(21) Application number: **01105257.8**

(22) Date of filing: **05.03.2001**

| | |
|---|---|
| (84) Designated Contracting States: **AT BE CH CY DE DK ES FI FR GB GR IE IT LI LU MC NL PT SE TR** Designated Extension States: **AL LT LV MK RO SI** | • **Renoldi, Simone** **21047 Saronno (VA) (IT)** |
| (71) Applicant: **Corning O.T.I. S.p.A.** **20126 Milano (IT)** | (74) Representative: **Grunfeld, David Peter et al** **Corning Limited,** **Patents and Licensing Department,** **Quantum House,** **Maylands Avenue** **Hemel Hempstead, Herts. HP2 7DE (GB)** |
| (72) Inventors: • **Sciancalepore, Davide** **10014 Caluso (TO) (IT)** | |

(54) **Integrated optical device comprising an adiabatic junction**

(57)     An optical waveguide device comprises at least one Y-junction integrated on a planar substrate. The junction comprises a first (1), a second (3) and a third (4) optical waveguide extending on the said substrate, and a transition portion (2), in which the second and third waveguides branch from the first waveguide, comprising a truncation (5) of predetermined width. At the position of the truncation, the width of the first waveguide is less than the sum of widths of the second waveguide, the third waveguide and the truncation. The first optical waveguide extends into the transition portion up to the bifurcation with its width essentially constant.

Fig.4

**EP 1 239 311 A1**

**Description**

The present invention relates to the field of integrated optical devices on planar substrates comprising at least one Y-junction. The present invention also relates to a method for forming an integrated optical device comprising at least one Y-junction. The present invention also relates to a mask for forming an integrated optical device comprising at least one Y-junction.

In the field of components used in optical communications produced with integrated optics, it is particularly important to produce structures capable of splitting the power of an optical signal which is propagated in a waveguide into two equal parts, these powers being transferred into two separate waveguides.

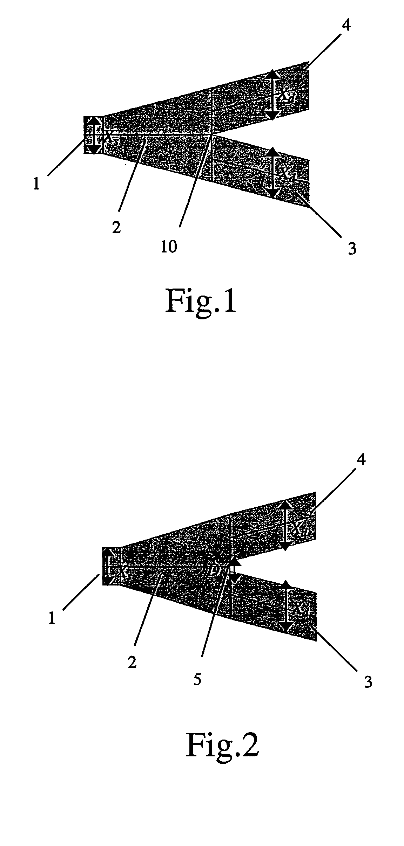

A symmetrical Y-junction, such as that shown schematically in Fig. 1, is generally used to provide this function. It normally consists of an input waveguide 1 of width $X_s$ which, as it widens progressively and continuously, is separated, in an intermediate transition region 2, into two separate output waveguides 3, 4, of width $X_d$ (generally equal to the width $X_s$ of the input guide), which are symmetrical with respect to the axis of the input guide 1 which lies in a longitudinal direction. These waveguides are integrated on a suitable planar substrate. Symmetrical Y-junctions are also known in the prior art as "3 dB couplers" or "3 dB splitters".

The operating principle of a Y-junction is based on mode evolution. The input waveguide 1 is generally single-mode, in other words it has geometrical dimensions such that only the fundamental mode of electromagnetic radiation of predetermined wavelength is propagated. The output waveguides 3 and 4 are also generally single-mode. On the other hand, the transition region 2 between the input guides 1 and the output guides 3 and 4, in other words the region in which the input waveguide widens progressively, can have dimensions such that the propagation of a plurality of higher-order modes of the said electromagnetic radiation can be propagated. The bifurcation at which the two output waveguides 3 and 4 are separated from each other is only theoretically a dimensionless "tip" 10 as shown schematically in Fig. 1. This is because limits imposed by the manufacturing process typically make it necessary for this bifurcation a rounding or a truncation 5, for example as shown in Fig. 2.

Y-junctions are frequently used as the "building bricks" of more complex optical structures, integrated on a single substrate, such as Mach-Zehnder interferometers or cascades of junctions with a tree structure, in which a first Y-junction is connected in cascade to various other Y-junctions, to form 1xN power splitters, in which an input optical power is divided into N equal parts at the output of the device. The aforesaid devices can be passive or active. In passive devices, the propagation of the electromagnetic radiation in the device is controlled solely by a suitable arrangement of the waveguides on the planar substrate. In active devices, the electromagnetic radiation is also controlled with the aid of suitable transducers of external signals, such as electrodes for electrical signals (in electro-optical devices) or electrodes for generating sound waves (in acousto-optical devices) or elements sensitive to changes in temperature (in thermo-optical devices), positioned on the substrate above or in the proximity of the optical waveguides. Examples of active devices using Y-junctions are Mach-Zehnder modulators, electro-optical switches, electro-optical attenuators, cascades of electro-optical switches.

For some applications it may be provided that the optical power carried by a waveguide should not be divided into equal parts in the two output waveguides. A Y-junction can therefore also be constructed in such a way that it is not longitudinally symmetrical.

A Y-junction must generally meet certain requirements, including those of:

    a) having low insertion loss;
    b) having low excitation of higher-order modes;
    c) having small longitudinal dimensions.

The use of a Y-junction within more complex optical structures, such as those mentioned above, means that these requirements must be satisfied in a particularly stringent way. For example, in a passive 1xN power splitter made in the form of a cascade of Y-junctions arranged in a tree structure, a high insertion loss of each Y-junction can raise the insertion loss of the whole device above a threshold of acceptability; the excitation of higher-order modes can cause incorrect power division in the junctions and/or a recoupling of optical power dispersed on the substrate in waveguides located down-line from the junction, and/or a loss of guided optical power due to the coupling of optical power to the higher-order modes; moreover, by making the longitudinal dimension of each junction as small as possible, a compact device can be produced, with a significant cost saving.

In particular, the transition region 2 between the input waveguide and the output waveguides 3 and 4, which has dimensions compatible with the propagation of higher-order modes, can be the cause of excitation of these modes. The coupling of optical power to the higher-order modes can be reduced by making the widening of the transition region take place at a very small angle (<1°) with respect to the longitudinal direction. In this case, we speak of "adiabatic widening". This solution can be disadvantageous, in that it inevitably causes an overall elongation of the device.

Some solutions have been proposed to improve the characteristics of Y-junctions.

For example, patent application (Kokai) JP 9-230151, in the name of Fujikura Ltd., describes an optical device comprising a substrate and a waveguide having a Y-junction on the said substrate. The object of the aforesaid patent application is to produce an element of smaller size than those produced in the past. The Y-junction comprises a first waveguide for transmitting light in a single mode, configured in such a way that its width increases with distance from the first waveguide and designed to convert the transmitted light from single mode to multi-mode; a straight section, connected at one end to the wider end of the widened section, which has a specified length and the same width as that of the wider end of the widened section, and which is designed to transmit multi-mode light; and a second and a third waveguide, positioned with their ends facing the other end of the straight section, configured so that they diverge from each other with a specified curvature as they depart from the straight section, and designed to transmit in single mode the light arriving from the other end of the straight section. The junction-type optical device is characterized in that the radius of curvature of the end portions of the second and third waveguides is selected to be less than 50 mm, and in that the width and length of the straight section are selected to be at a level which minimizes the coupling loss between the straight section and the second and third waveguides. The second and third waveguides face each other towards the straight section across a first discontinuity of specified width G1 and are separated from each other by a second discontinuity of width G2. To minimize the coupling losses between the straight section and the second and third waveguides, optimal values are also selected for the angle of widening of the widened section, for the width and the length of the straight section, and for the widths of the discontinuities G1, G2.

Patent application (Kokai) JP 9-33740, in the name of Hitachi Cable Ltd., describes an optical waveguide Y-branch, comprising an input waveguide and two branch waveguides connected to the input waveguide, configured to bifurcate an input light, in which the central axis of the input waveguide and the central axis between the two branch waveguides are out of alignment with each other. In this structure, the light entering the input waveguide enters the two branch guides while it diverges from the central axis of the two branch guides, preventing a situation in which the optical power is distributed uniformly between the two branch waveguides. The optical power is therefore distributed according to the branching ratio as a function of the misalignment of the two central axes. In a preferred configuration, a widened waveguide connects the input waveguide to the branch waveguides.

Patent application WO 97/32228, in the name of Institut fur Mikrotechnik Mainz GmbH, describes an integrated optics 1xN splitter with an input waveguide and N output waveguides, in which at least the outermost output waveguides are inclined with respect to each other. The 1xN splitter also has a separator containing a region located upstream the point of intersection of the inner edges of the outermost waveguides, and having the same refractive index as the cladding of the waveguide. The 1xN splitter is characterized by low attenuation, while providing a wide branching angle. The width of the separator can, for example, increase or decrease.

The Applicant has observed that, in a Y-junction such as that shown schematically in Fig. 2, in which there is a truncation 5 of the tip in the bifurcation region, there is an excitation of higher-order modes in the intermediate transition region, even in structures with adiabatic widening. According to the Applicant, this is due to the fact that the truncation introduces a discontinuity of finite dimensions into the refractive index profile in the bifurcation region (bifurcation discontinuity), particularly where the width of the waveguides is such that the propagation of higher-order modes is supported. As has been stated, the excitation of higher-order modes is an undesirable phenomenon. The Applicant has also observed that the provision of a separation region having the same refractive index as the substrate in the bifurcation region, as described in patent application WO 97/32228 cited above, does not enable this problem to be resolved in a satisfactory way.

**Summary of the invention**

The Applicant has found that it is possible to reduce the excitation of higher-order modes in the intermediate region of transition from the input waveguide to the output waveguides of a Y-junction such as that shown schematically in Fig. 2, by essentially eliminating the region of progressive widening of the input waveguide 1 and introducing a discontinuity between the width of the final portion of the input waveguide 1 and the width of the initial portion of the output waveguides 3 and 4 at the position of the truncation 5. According to the Applicant, this discontinuity of width makes it possible to essentially compensate the negative effect of the discontinuity introduced by the truncation 5 into the bifurcation region located between the output waveguides 3 and 4. In particular, the Applicant has found that the aforesaid geometrical discontinuity of width in the transition region can be designed in such a way that there is essentially a continuity in optical terms, in other words in such a way that the profile of the electromagnetic field immediately before the bifurcation is essentially identical to the profile of the electromagnetic field immediately after the bifurcation.

In order to produce this waveguide structure, the discontinuity of width can be suitably formed in a mask used in the process of manufacturing the device comprising the Y-junction.

In a first aspect, the invention relates to an optical waveguide device, comprising at least one Y-junction integrated on a planar substrate. The junction comprises a first, a second and a third optical waveguide extending on the substrate, and a transition portion in which the said second and third waveguides branch from the said first waveguide, comprising a bifurcation discontinuity of predetermined width. Essentially at the position of the bifurcation discontinuity, the width of the first waveguide is less than the sum of widths of the second waveguide, the third waveguide and the bifurcation discontinuity. The first optical waveguide extends into the transition portion as far as the bifurcation discontinuity with its width essentially unchanged.

The width of the bifurcation discontinuity is typically more than 0.2 $\mu$m.

The transition portion can also comprise a separation region between the second and third waveguides, having a refractive index lower than the refractive indices of the second and third waveguides. The width of the separation region can be essentially constant throughout the transition portion, or can increase progressively away from the first waveguide.

The width of the second and third waveguides can also increase progressively in the said transition portion away from the first waveguide.

Preferably, the waveguides of the junction are of the single-mode type.

In a second aspect, the invention relates to a method for forming an integrated optical waveguide device, comprising the steps of:

- providing a planar substrate of a first material having a refractive index;
- integrating a waveguide structure in at least one portion of the said substrate by using a second material, the said second material being capable of increasing the said refractive index in the said portion of substrate,
- the said step of integrating comprising a step of providing in a mask at least one region which is transparent to an exposure radiation of predetermined wavelength, the said transparent region delimiting a structure essentially corresponding to the said waveguide structure, the said waveguide structure comprising at least one Y-shaped portion having an input waveguide, a transition portion and two output waveguides, the said transition portion comprising a truncation of predetermined width of the bifurcation of the said output waveguides from the said input waveguide.

The step of providing at least one transparent region in the said mask comprises providing in the transition portion a discontinuity of width essentially at the position of the truncation, such that the sum of the widths of the output waveguides and of the truncation is greater than the width of the input waveguide.

The integration step can also comprise the additional steps of:

- depositing a first layer of the second material;
- depositing a second layer of a photosensitive material;
- facing the mask to the second layer;
- exposing the mask to the exposure radiation, modifying the second layer in such a way as to mark out a profile of the waveguide structure to be integrated;
- eliminating a portion of the second material outside the said profile.

According to one manufacturing method, the integration step additionally comprises, after the said elimination step, the step of:

- diffusing the second material into the said substrate at a predetermined temperature.
  The diffusion temperature can be in the range from approximately 900°C to 1150°C.
  The first material can be, for example, lithium niobate. The second material can be, for example, titanium.
  In a third aspect, the invention relates to a mask for forming an optical waveguide device, comprising at least one region transparent to an exposure radiation of predetermined wavelength. The transparent region delimits a structure which essentially corresponds to a waveguide structure to be integrated on a planar substrate, the said waveguide structure comprising at least one Y-shaped portion having an input waveguide, a transition portion and two output waveguides. The transition portion comprises a truncation of predetermined width of the bifurcation of the output waveguides from the input waveguide. The transition portion also comprises a discontinuity of width essentially at the position of the truncation, such that the sum of the widths of the output waveguides and of the truncation is greater than the width of the input waveguides.

**Brief description of the figures**

Some examples of the present invention are described below, with reference to the attached drawings, provided solely for explanatory purposes and without restrictive intent, in which

- Figure 1 shows in a general way a Y-junction as described above;

- Figure 2 shows schematically a Y-junction with truncation in the bifurcation region, as described above;
- Figure 3 shows schematically a Y-junction according to the known art;
- Figure 4 shows schematically a preferred embodiment of a Y-junction according to the invention;
- Figure 5 shows schematically a Y-junction configuration according to the invention used by the Applicant for a set of simulations;
- Figures 6a and 6b show the result of the simulations carried out with the configuration of Fig. 5 for TE polarization and TM polarization respectively;
- Figure 7 shows the result of a BPM simulation with a Y-junction according to the known art, of the type shown in Fig. 2;
- Figure 8 shows the result of a BPM simulation with a Y-junction according to the known art, of the type shown in Fig. 3;
- Figure 9 shows the result of a BPM simulation with a Y-junction according to the invention, of the type shown in Fig. 4.

**Detailed description of examples of the invention**

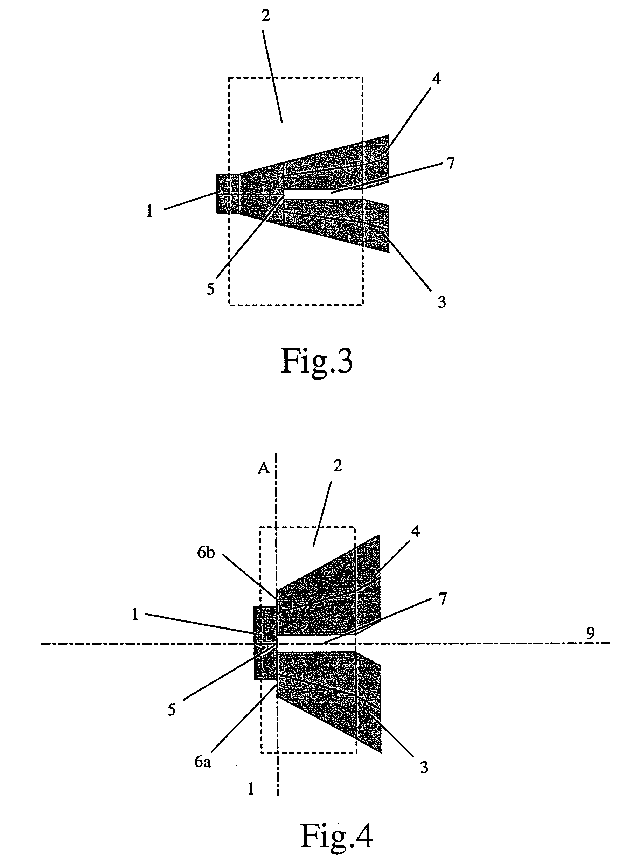

Figure 4 shows a preferred embodiment of an optical Y-junction according to the present invention. The junction is integrated on a planar substrate and comprises an input waveguide 1 and two output waveguides 3, 4. The waveguides 1, 3, 4 are adapted for guiding an electromagnetic radiation having a predetermined wavelength. The Y-junction also has a transition region 2, described in detail below, in which the output waveguides 3 and 4 depart from the input waveguide 1.

Here and in the remainder of the description, the terms "input" and "output" are used solely with exemplary purpose and without restrictive intent. In fact, the Y-junction can operate either as a 1x2 splitter (if the radiation enters from the first waveguide 1 and leaves from the second waveguide 3 and from the third waveguide 4), or as a 2x1 coupler (if radiation from the second and/or from the third waveguide 3, 4 leaves from the first waveguide 1).

For a 3 dB splitter (or coupler), the Y-junction has a plane of essential symmetry orthogonal to the plane of the figure which defines in the same plane an axis 9 lying in a longitudinal direction. This direction essentially corresponds to the direction of propagation of the light radiation in the input guide 1. For other applications, the output waveguides 3, 4 can be made non-symmetrical with respect to the axis 9.

The planar substrate can be made from any material suitable for the integration of optical waveguides. For example, the substrate is made from lithium niobate ($LiNbO_3$). This material can be used advantageously for making, for example, electro-optical or acousto-optical devices comprising the Y-junction according to the invention. Alternatively, the substrate can be made from glass or polymer material. According to the specific requirements, a person skilled in the art can adapt the teachings disclosed herein to Y-junctions formed on any type of planar substrate.

In examples produced by the Applicant, the Y-junction is formed in a lithium niobate substrate, having a structure orientated with a cut perpendicular to the crystallographic x axis ("x-cut") and a direction of light propagation selected according to the crystallographic y axis ("y-propagation"). Alternatively, the structure can comprise a substrate with a cut perpendicular to the y axis ("y-cut") and with light propagation essentially along the x axis ("x-propagation"). The x-cut or y-cut structures have reduced temperature drift phenomena (in other words, smaller variations of the operating point due to variations of temperature) and make it possible to produce electro-optical or acousto-optical devices with low electrical drive power. As a further alternative, the substrate can be of the type with a cut along the z axis ("z-cut") and a direction of propagation along the x axis ("x-propagation") or along the y axis ("y-propagation").

The structure of the junction is such that the optical signals have effective directions of propagation of the electromagnetic radiation defined essentially by the directions of extension of the waveguides 1, 3, 4. In particular, the output waveguides 3 and 4 form, at least in their initial position, an angle which is preferably less than 2° (in absolute terms) with the axis 9. This angle can be measured by taking the central axis of the waveguides 3 and 4 as the reference.

Preferably, the waveguides 1, 3, 4 have a width such that a single mode of the radiation of predetermined wavelength can be propagated. This radiation has a wavelength which preferably lies in the range from approximately 1525 nm to 1610 nm. Alternatively, the junction can be adapted for the propagation of radiation in the vicinity of 1300 nm, in the so-called "second window". According to the specific requirements, a person skilled in the art can adapt the teachings disclosed herein to Y-junctions designed for the propagation of optical signals at any wavelength.

One or more Y-junctions according to the invention can advantageously be used in a more complex planar optics device, such as an interferometer or a cascade of Y-junctions. This device can be active or passive, as indicated above.

By a technique known as "diffusion", the waveguides 1, 3, 4 of the Y-junction can be formed by depositing on the substrate a layer of a material capable of raising the refractive index above that of the substrate, for example titanium, and then delimiting its profile by means of photolithographic techniques and finally diffusing the remaining titanium by a thermal method, at a temperature in the range from approximately 900°C to 1150°C, into the underlying substrate.

Preferably, the thickness of titanium initially deposited on the substrate is less than 500 nm, and more preferably it is in the range from 50 nm to 150 nm. Alternatively, a method known as "proton exchange" can be used to form the waveguides. In all cases, the refractive index in the region of the waveguides is raised above the refractive index of the surrounding substrate.

The integration of the waveguides on the planar substrate is generally carried out by means of a mask, which is prepared in such a way that the structure of the waveguides which are to be integrated is essentially reproduced. In particular, the mask is made in such a way that it is transparent to an electromagnetic exposure radiation, typically ultraviolet, in the region corresponding to the waveguide structure to be integrated, and opaque outside this region (positive mask), or vice versa (negative mask). In one method of production, the integration process provides the deposition of an essentially uniform layer of titanium (or other material which can be integrated into the substrate, can raise the refractive index above that of the substrate and causes low attenuation of the optical signal to be propagated) over the whole surface of the substrate. A layer of a photosensitive material (known as "photoresist") is deposited on top of the titanium layer. The mask is then faced to the photoresist and is exposed to the radiation: the transparent regions formed on the mask allow the passage of the radiation and the consequent modification of the photosensitive layer, and thus the profile of the waveguide structure to be formed is marked out. At this point, the excess titanium, outside the profile of the waveguide to be integrated, is removed, after which the titanium which has not been removed is integrated into the substrate (after the layer of photoresist lying above the titanium has also been removed). According to another manufacturing method, the layer of photoresist is first deposited on the substrate, and the mask is then applied and exposed in such a way that the profile of the waveguide to be formed is marked out. The portion of photoresist lying within this profile is removed. At this point an essentially uniform layer of titanium is deposited. The remaining photoresist is then removed by means of a suitable solvent, and consequently the excess titanium deposited on it is also removed.

In order to make the process of integrating the Y-junction on the substrate repeatable, the mask is prepared in such a way that the bifurcation region of the output waveguides 3 and 4, delimited by the inner edges of these waveguides, has a truncation 5 of predetermined width. In the configuration shown in Fig. 4, the truncation 5 is located at the end of an optional separation region 7, described specifically in the remainder of the description. Typically, the truncation has a width of more than approximately 0.2 μm, preferably more than 0.5 μm. In examples produced by the Applicant, the truncation 5 has a width of approximately 1.0-1.2 μm. Here and elsewhere in the description, and in the following claims, the term "width" denotes a dimension determined by a measurement made along a direction essentially perpendicular to a longitudinal direction.

The Applicant has observed that the forming of this truncation, while permitting the achievement of a good degree of repeatability of the Y-junction production process, has the drawback of creating a discontinuity in the refractive index profile in the transition portion 2. In particular, the Applicant has observed that the discontinuity considerably modifies the modes which are propagated in the transition region 2. In the description and in the claims, this discontinuity and the truncation will be referred to as a "bifurcation discontinuity". By means of simulations carried out with a field propagation model ("Beam Propagation Method", or BPM), the Applicant has observed that the bifurcation discontinuity can cause the excitation of higher-order modes within the transition portion 2 between the input waveguide 1 and the output waveguides 3 and 4.

The Applicant has found that the excitation of higher-order modes in the junction can be reduced by introducing a geometrical discontinuity of width into the transition region 2 between the input waveguide 1 and the output waveguides 3 and 4, essentially at the position of the bifurcation discontinuity 5. The discontinuity of width is shown schematically in Fig. 4 by the two abrupt widenings 6a and 6b. Preferably, the two widenings 6a and 6b are essentially perpendicular to a longitudinal direction. In Fig. 4, A indicates a surface placed transversely with respect to a longitudinal direction at the position of the bifurcation discontinuity 5. On the surface A, the width of the input waveguide 1 is less than the sum of the widths of the two output waveguides 3, 4 and the bifurcation discontinuity 5. The surface A will be referred as "bifurcation transverse surface" in the remainder of the description.

The discontinuity of width is obtained in the integrated device by providing the mask with widening areas 6a, 6b which are essentially aligned in the transverse direction with respect to the bifurcation discontinuity 5. Depending on the type of process used, the actual arrangement of the waveguides at the end of the integration process may be slightly different in practice from that formed on the mask, owing to rounding and/or diffusion of the material constituting the waveguide.

The Applicant believes that, in order to benefit from the positive effects of the invention, the discontinuity of width 6a, 6b and the bifurcation discontinuity 5 should be within approximately 5 μm of each other in the longitudinal direction in the finished device. Therefore, both here and in the remainder of the description and in the attached claims, the phrase "essentially at the position of the bifurcation discontinuity" means "at a distance of less than approximately 5 μm, measured in a longitudinal direction, from the bifurcation discontinuity".

According to a hypothesis formulated by the Applicant, the "outer" discontinuities 6a and 6b tend to "compensate" the "inner" discontinuity 5. As will be demonstrated in detail in the remainder of the description, the Applicant has found that the aforesaid geometrical discontinuity of width in the transition region 2 can be optimized in such a way that it essentially gives rise to a continuity in optical terms, in other words in such a way that the profile of the electromagnetic field immediately upstream the bifurcation transverse surface A is made essentially identical to the electromagnetic field immediately downstream the bifurcation transverse surface A. In other words, the discontinuity of width can be designed in such a way as to obtain optimal superimposition between the modes propagated in the input waveguide 1 and the modes propagated in the output waveguides 3 and 4, without the need to introduce a widened portion of guide for this purpose.

In fact, when Fig. 4 is compared with Fig. 2, it can be seen that, with the exception of the region 7 of which more will be said subsequently, the region of progressive widening in the transition region 2 is practically eliminated by contacting the output waveguides 3 and 4 directly to the input waveguide 1. This makes it possible to avoid the provision, on the substrate, of portions of waveguides having dimensions such that they support higher-order modes, with the additional advantage due to the fact that the completed junction has much smaller geometrical dimensions.

In order to avoid the excitation of higher-order modes, the dimensions of the input waveguide 1 are such that the same number of propagation modes is supported throughout the transition region 2. For this purpose, the width of the input waveguide 1 remains essentially unchanged as it approaches the bifurcation transverse surface A. The phrase "essentially unchanged width" denotes, here and in the following claims, a widening not exceeding 50% of the initial width. This does not preclude the provision of a small widening of the input waveguide in the transition region 2 approaching the bifurcation transverse surface A, if this should be necessary for the design of the device (for example, because the Y-junction is to be connected to another device having guides of a different size), but, in this case, this widening should always change the dimensions of the input waveguide in such a way that the propagation of higher-order modes is not supported.

Preferably, the sum of the widths of the output waveguides 3, 4 and the bifurcation discontinuity 5 is greater than the width of the input waveguide at the position of the bifurcation surface A by a quantity in the range from approximately 10% to 50%, or even more preferably by a quantity in the range from approximately 15% to 35%.

Preferably, the transition region 2 of the Y-junction according to the invention additionally comprises a separation region 7, extending essentially in a longitudinal direction upstream the intersection between the continuation of the inner edges of the output waveguides 3 and 4, and having a width at least equal to the width of the bifurcation discontinuity 5. The separation region 7 has a refractive index which is lower than the refractive index of the waveguides and can be formed from the same material as the substrate. In this case, the bifurcation discontinuity 5 will coincide with one end of the separation region 7. In a preferred embodiment, the width of the separation region 7 increases away from the transverse bifurcation surface A. The presence of the separation region 7 can also be made to cause a progressive increase in the width of the initial portion of the output waveguides 3 and 4 in the transition region 2. The separation region 7 can also be produced by designing the mask in a suitable way, by providing a region essentially corresponding to the separation region 7 in the portion adapted to delimit the transition portion 2.

Example 1

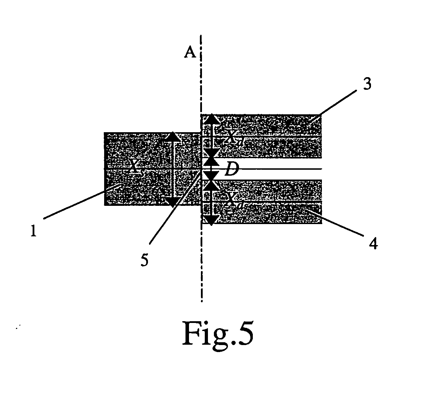

The Applicant carried out a series of simulations, using a conventional BPM model (BPM CAD Waveguide Optics Modelling Software System, Version 4.0, marketed by Optiwave Corporation) for a Y-junction integrated by diffusion of titanium on lithium niobate. Starting from a waveguide configuration such as that shown schematically in Fig. 5, comprising a straight input waveguide 1 of width $X_s$ and two straight waveguides 3 and 4 of width $X_d$, separated by a bifurcation discontinuity 5 of width D=1.2 $\mu$m, a search was made for configurations which would make the profiles of the modes of the electromagnetic field as equal as possible upstream and downstream the bifurcation surface A located at the position of the bifurcation discontinuity 5. It should be noted that in the schematic illustration in Fig. 5 the bifurcation surface A represents the transition portion of the junction.

In particular, the fundamental mode upstream and downstream the bifurcation surface A was calculated for an electromagnetic radiation at 1550 nm, after which the superimposition integral was found, so that the optical power losses could be evaluated. The superimposition integral is defined as

$$I = \frac{\left| \int E_1 \cdot E_2^* \right|^2}{\int \left| E_1 \right|^2 \cdot \int \left| E_2 \right|^2}$$

where $E_1$ and $E_2$ are the amplitudes of the fundamental mode of the electromagnetic field upstream and downstream the bifurcation surface respectively. The calculation of the integrals is intended to be referred to the dimensions of the substrate. The possible values of the superimposition integral $I$ are in the range from 0 to 1, and can be reported as percentages. A percentage close to 100% indicates that the range is essentially coupled to the fundamental mode only.

The calculation was carried out separately for each of the polarization states, TE and TM.

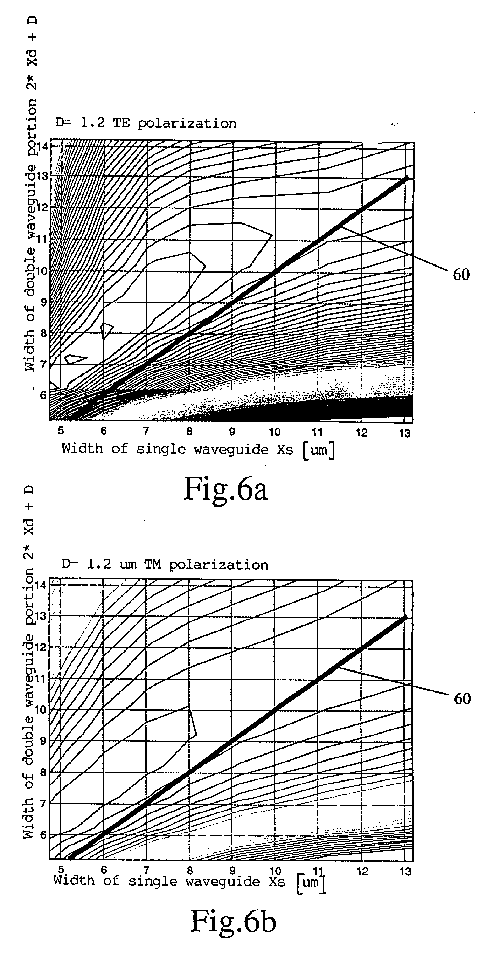

The result of the simulations is shown in Figures 6a and 6b, which show the level curves of the superimposition integrals for the TE polarization state and the TM polarization state respectively. In both graphs, the horizontal axis shows the width $X_s$ of the input waveguide 1 and the vertical axis shows the sum $2X_d + D$ of the widths of the output waveguides 3 and 4 and the bifurcation discontinuity 5. The straight line 60 represents the locus of the points for which $X_s = 2 X_d + D$, in other words those for which there is no discontinuity of width in the bifurcation of the two output waveguides from the input waveguide.

The highest values found for the superimposition integral are shown in Figures 6a-6b by the curves which tend to loop back on themselves and which are above the straight line 60, for widths of the input waveguide of less than 9-10 μm. This corresponds to configurations in which the sum of the widths of the output waveguides 3 and 4 and of the bifurcation discontinuity 5 is greater than the width of the input waveguide 1. The other level lines correspond to values of the superimposition integral decreasing progressively with distance from the aforesaid curves. In particular, Fig. 6a shows two level curves corresponding to values of approximately 99.8% of the superimposition integral, these curves being essentially centred on widths $X_s$ of the input waveguide of approximately 5 and 6 μm, with a sum $2X_d + D$ of the widths of the output waveguides and the bifurcation discontinuity of approximately 7 and 8 μm respectively. These last configurations can be used advantageously to form Y-junctions with single-mode guides for optical signals having wavelengths of about 1550 nm, with a suitable widening of the output waveguides away from the bifurcation, up to values of width of about 5-6 μm.

<u>Example 2</u>

The Applicant carried out three different simulations with the BPM model on the same number of Y-junctions, in order to reveal the mode behaviour in each of the three structures.

In a first structure, made according to the known art illustrated in Fig. 2, the input waveguide 1 and the output waveguides 3 and 4 had widths of 6 μm each, and the bifurcation discontinuity 5 had a width of 1.2 μm. The transition region 2 consisted of a region of progressive widening from 6 μm to 6+6+1.2 μm with an inclination of 0.1° with respect to the longitudinal direction, with a length of approximately 2000 μm.

In a second structure, made according to the known art illustrated in Fig. 3, the transition region 2 also comprised a separation region 7 with a width of 1.2 μm, located upstream the intersection between the continuations of the inner edges of the output waveguides 3 and 4. The separation region 7 extended into the transition region 2 for a distance of approximately 1500 μm, therefore leaving a "residual" region of widening of approximately 500 μm. The width of the initial portion of the output waveguides 3 and 4 at the position of the separation discontinuity 5 was approximately 3 μm.

In a third structure, made according to the preferred embodiment of the invention shown in Fig. 4, the input waveguide 1 and the output waveguides 3, 4 had a width of 6 μm, and the separation region 7 had a width of 1.2 μm and a length of 1700 μm. The discontinuity of width was provided by making the width of the initial portion of the output waveguides 3 and 4 equal to 3 μm. The inclination of the outer edges of the initial portion of the output waveguides was 0.1°.

Table 1 below summarizes the structural data of the simulated junctions:

Table 1

| | Comparison 1 | Comparison 2 | Invention |
|---|---|---|---|
| Width of input waveguide (μm) | 6 | 6 | 6 |
| Width of output waveguides in the transition region (μm) | 6 | From 3 to 6 | From 3 to 6 |
| Width of bifurcation discontinuity (μm) | 1.2 | 1.2 | 1.2 |
| Length of separation region (μm) | --- | 1500 | 1700 |
| Length of widening region (μm) | 2000 | 500 | ---- |
| Width of widening region (μm) | From 6 to 13.2 | From 6 to 7.2 | ---- |
| Inclination of widening region | 0.1° | 0.1° | ---- |
| Initial inclination of output waveguides (outer edges) | 0.1° | 0.1° | 0.1° |

The experiment consisted in the simulation of the injection of a radiation at 1550 nm into the input waveguide of the structures shown above and the observation of its variation.

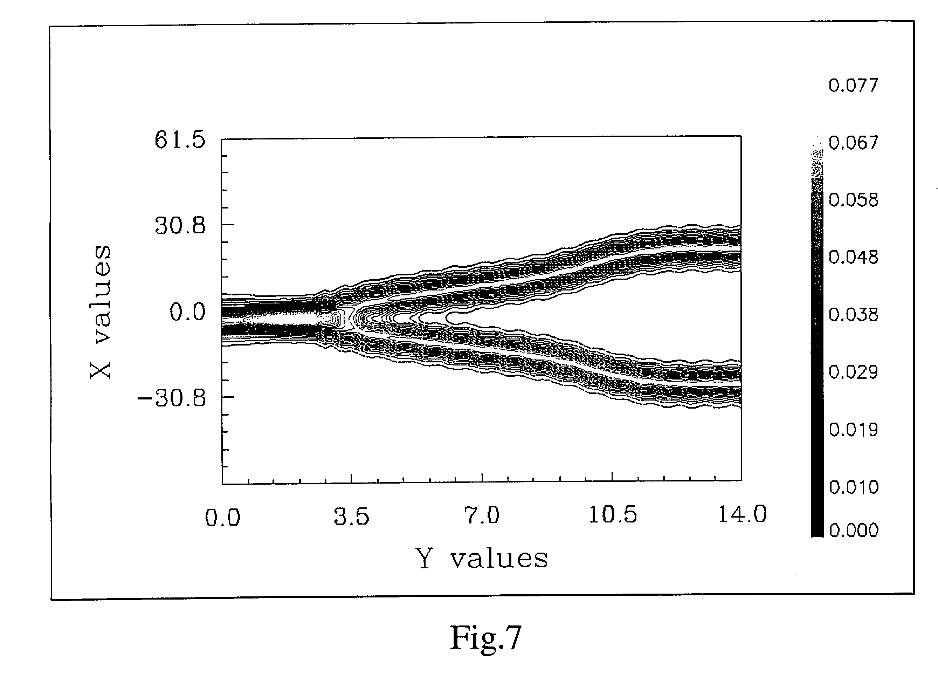

The results obtained from the simulation are shown, for the three structures described, in Figures 7, 8 and 9 respectively.

As is shown in Fig. 7, corresponding to the structure of Fig. 2, the propagating mode is perturbed along the output waveguides by mode components belonging to the radiated spectrum. According to the Applicant, the bifurcation discontinuity 5 causes the excitation of higher-order modes in the portion of the transition region where the waveguides have dimensions such that some higher-order modes can also be supported. These modes are radiated into the substrate, unguided by the single-mode output waveguides, at a certain angle with respect to the direction of the waveguides, thus perturbing the mode propagated within the waveguide, at least in an initial portion. Moreover, a portion of optical power arising from the second higher-order mode, excited at the bifurcation discontinuity, can be coupled at the output of the junction to the fundamental mode, in a way which is unpredictable in practice and undesirable.

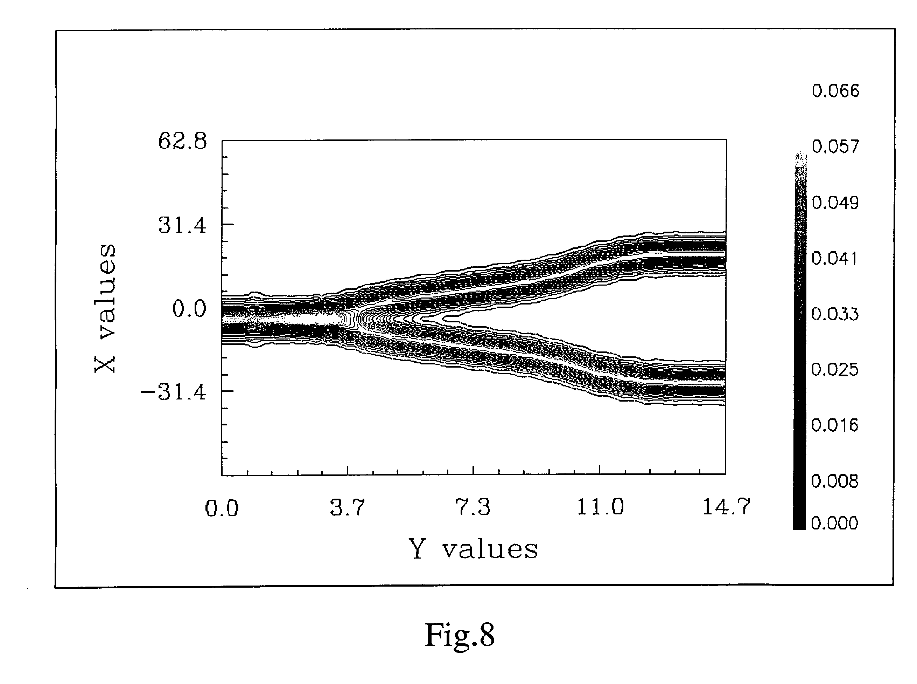

As is shown in Fig. 8, corresponding to the structure of Fig. 3, there is an improvement with respect to the result of Fig. 7, but a residual perturbation of the propagating mode can still be observed.

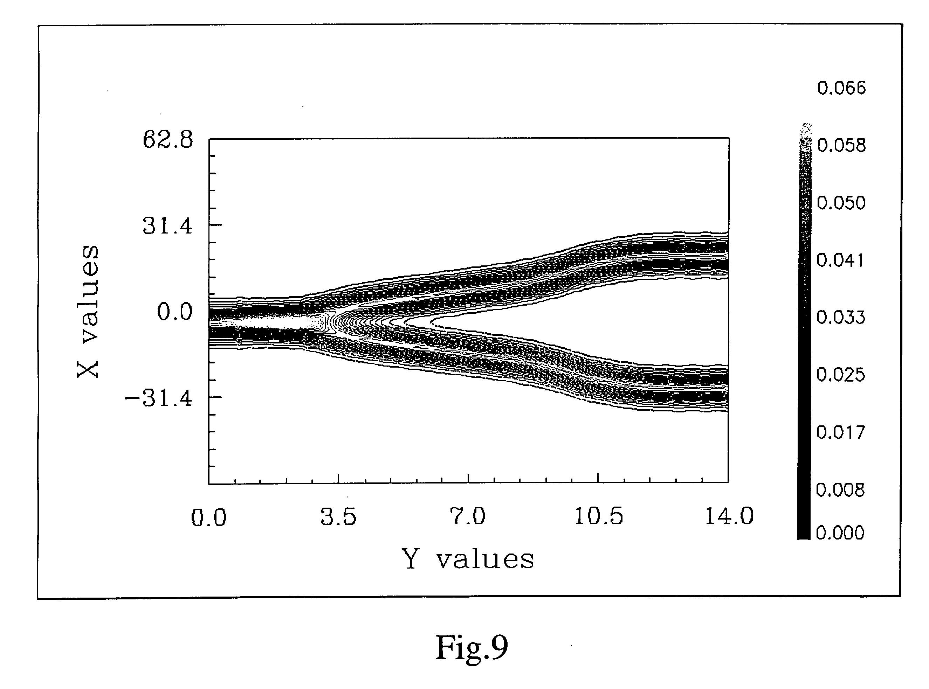

At the contrary, this perturbation is essentially eliminated in Fig. 9, corresponding to the structure according to the invention shown in Fig. 4. It should be noted that this result was obtained by using a transition region having a length of 1700 μm, measured from the beginning of the bifurcation of the output waveguides from the input waveguide to the beginning of the area in which the output waveguides begin to have an essentially constant width, as opposed to the length of 2000 μm present in the two comparison examples. Thus a Y-junction with low excitation of higher-order modes and having extremely compact dimensions was discovered. This is highly advantageous, particularly in the case of the integration of devices comprising a plurality of Y-junctions on the same substrate.

Example 3

The Applicant repeated the simulations illustrated with reference to Example 2, after modifying the width of the waveguides. In this set of simulations, the width of the input and output waveguides was 7 μm. These guides are bimodal for a radiation with a wavelength of 1550 nm. The insertion loss (IL) of the fundamental mode and the optical power (P) coupled to the first higher-order mode (propagated in the waveguides in this case) were evaluated for the three structures at the output of one of the two branches of the junction. In this case also, the experiment consisted in simulating the injection of a radiation at 1550 nm into the input waveguide of the structures shown above, to observe its variation. The results are summarized in Table 2 below.

Table 2

|  | Comparison 1 | Comparison 2 | Invention |
|---|---|---|---|
| IL of fundamental mode (dB) | 3.02 | 3.02 | 3.01 |
| P of 1st higher-order mode | -24 dB | -25 dB | -34 dB |

As can be seen, the structure according to the invention slightly reduces the insertion loss of the fundamental mode and significantly reduces the excitation of the first higher-order mode.

**Claims**

**1.** Optical waveguide device, comprising at least one Y-junction integrated on a planar substrate, the said junction comprising:

a first (1), a second (3) and a third (4) optical waveguide extending on the said substrate,
a transition portion (2) in which the said second (3) and third (4) waveguides branch from the said first waveguide (1), comprising a bifurcation discontinuity (5) of predetermined width,

**characterized in that**
essentially at the position of the said bifurcation discontinuity (5), the width of the said first waveguide (1) is less than the sum of widths of the said second waveguide (3), the said third waveguide (4) and the said bifurcation discontinuity (5), and
the said first optical waveguide (1) extends into the said transition portion (2) up to the said bifurcation discontinuity (5) with its width essentially unchanged.

**2.** Device according to Claim 1, **characterized in that** the width of the said bifurcation discontinuity (5) is greater than 0.2 μm.

**3.** Device according to Claim 1 or 2, **characterized in that** the said transition portion (2) comprises a separation region (7) between the said second and third waveguides (3, 4), the said separation region (7) having a refractive index lower than the refractive index of the said second and third waveguides (3, 4).

**4.** Device according to Claim 3, **characterized in that** the width of the said separation region (7) is essentially constant throughout the transition portion (2)

**5.** Device according to Claim 3, **characterized in that** the width of the said separation region (7) increases progressively away from the said first waveguide (1).

**6.** Device according to any one of Claims 1 to 5, **characterized in that** the width of the said second and third waveguides (3, 4) increases progressively in the said transition portion (2) away from the said first waveguide (1).

**7.** Device according to any one of Claims 1 to 6, **characterized in that** the sum of the widths of the said second and third waveguides (3, 4) and the bifurcation discontinuity (5) exceeds the width of the said first waveguide (1) at the said bifurcation discontinuity (5) by a quantity in the range from approximately 10% to 50%.

**8.** Device according to Claim 7, **characterized in that** the sum of the widths of the said second and third waveguides (3, 4) and the bifurcation discontinuity (5) exceeds the width of the said first waveguide (1) at the said bifurcation discontinuity (5) by a quantity in the range from approximately 15% to 35%.

**9.** Device according to any one of the preceding claims, **characterized in that** the said first, second and third waveguides (1, 3, 4) are adapted to allow the propagation of a single mode of a radiation of predetermined wavelength.

**10.** Device according to any one of the preceding claims, **characterized in that** the said second and third waveguides (3, 4) branch from the said first waveguide (1) in an essentially symmetrical way.

**11.** Device according to any one of the preceding claims, **characterized in that** the said planar substrate is made from lithium niobate.

**12.** Method for forming an integrated optical waveguide device, comprising the steps of:

- providing a planar substrate of a first material having a refractive index;
- integrating a waveguide structure in at least one portion of the said substrate by using a second material, the said second material being capable of increasing the said refractive index in the said portion of substrate;
- said step of integrating comprising a step of providing in a mask at least one region which is transparent to an exposure radiation of predetermined wavelength, the said transparent region delimiting a structure essentially corresponding to the said waveguide structure, the said waveguide structure comprising at least one Y-shaped portion having an input waveguide (1), a transition portion (2) and two output waveguides (3, 4), the said transition portion comprising a truncation (5) of predetermined width of the bifurcation of the said output waveguides (3, 4) from the said input waveguide (1);

**characterized in that** the said step of providing at least one transparent region in the said mask comprises

- providing in the transition portion (2) a discontinuity of width (6a, 6b) essentially at the position of the said truncation (5), such that the sum of the widths of the said output waveguides (3, 4) and of the said truncation (5) is greater than the width of the said input waveguide (1), and
- providing said input waveguide (1) in such a way that it extends into the said transition portion (2) up to the said truncation (5) while keeping its width essentially unchanged.

**13.** Method according to Claim 12, **characterized in that** the said step of integrating comprises the additional steps of:

- depositing a first layer of the said second material;
- depositing a second layer of a photosensitive material;

- facing the mask to the said second layer;
- exposing the said mask to the said exposure radiation, modifying the second layer in such a way as to mark out a profile of the waveguide structure to be integrated;
- eliminating a portion of the said second material outside the said profile.

14. Method according to Claim 13, **characterized in that** the said step of integrating additionally comprises, after the said step of eliminating, the step of:

- diffusing the said second material into the said substrate at a predetermined temperature.

15. Method according to Claim 14, **characterized in that** the said temperature is in the range from approximately 900°C to 1150°C.

16. Method according to any one of Claims 12 to 15, **characterized in that** the said first material is lithium niobate.

17. Method according to any one of Claims 12 to 16, **characterized in that** the said second material is titanium.

18. Method according to any one of Claims 13 to 17, **characterized in that** the thickness of the said first layer of material is less than approximately 500 nm.

19. Method according to Claim 18, **characterized in that** the said thickness is in the range from 50 nm to 150 nm.

20. Mask for forming an optical waveguide device, comprising at least one region transparent to an exposure radiation of predetermined wavelength, the said transparent region delimiting a structure which essentially corresponds to a waveguide structure to be integrated on a planar substrate, the said waveguide structure comprising at least one Y-shaped portion having an input waveguide (1), a transition portion (2) and two output waveguides (3, 4), the said transition portion comprising a truncation (5) of predetermined width of the bifurcation of the said output waveguides (3, 4) from the said input waveguide (1),
**characterized in that**
it comprises, in the said transition portion (2), a discontinuity of width (6a, 6b) essentially at the position of the said truncation (5), such that the sum of the widths of the said output waveguides (3, 4) and of the said truncation (5) is greater than the width of the said input waveguides (1), and
the said input waveguide (1) extends into the said transition portion (2) up to the said truncation (5) with its width essentially unchanged.

21. Mask according to Claim 20, **characterized in that** it comprises, in the said transition portion, a separation region (7) between the said output waveguides (3, 4) with a width at least equal to the width of the said truncation (5).

22. Mask according to Claim 21, **characterized in that** the width of the said separation region (7) is essentially constant throughout the transition portion (2).

23. Mask according to Claim 21, **characterized in that** the width of the said separation region (7) increases progressively away from the said first waveguide (1).

24. Mask according to any one of Claims 20 to 23, **characterized in that** the sum of the widths of the said output waveguides (3, 4) and of the said truncation (5) exceeds the width of the said input waveguide (1) at the said bifurcation by a quantity in the range from 10% to 50%.

25. Mask according to Claim 24, **characterized in that** the sum of the widths of the said output waveguides (3, 4) and of the said truncation (5) exceeds the width of the said input waveguide (1) at the said bifurcation by a quantity in the range from 15% to 35%.

26. Mask according to any one of Claims 20 to 25,
**characterized in that** the width of the said truncation is greater than 0.2 µm.

Fig.1

Fig.2

Fig.3

Fig.4

Fig.5

D= 1.2 TE polarization

Fig.6a

D= 1.2 um TM polarization

Fig.6b

Fig.7

Fig.8

Fig.9

**European Patent Office**

## EUROPEAN SEARCH REPORT

Application Number

EP 01 10 5257

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | PATENT ABSTRACTS OF JAPAN vol. 1997, no. 06, 30 June 1997 (1997-06-30) & JP 09 033740 A (HITACHI CABLE LTD), 7 February 1997 (1997-02-07) | 1-3,5, 7-26 | G02B6/125 |
| Y | * abstract * & DATABASE WPI Derwent Publications Ltd., London, GB; AN 1997-169428[16] * abstract * | 4,6 | |
| A | YOSI SHANI ET AL: "BURIED RIB PASSIVE WAVEGUIDE Y JUNCTIONS WITH SHARP VERTEX ON INP" IEEE PHOTONICS TECHNOLOGY LETTERS, IEEE INC. NEW YORK, US, vol. 3, no. 3, 1 March 1991 (1991-03-01), pages 210-212, XP000202936 ISSN: 1041-1135 * page 210, line 9-13 * | 1 | |
| A | VEERMAN F B ET AL: "AN OPTICAL PASSIVE 3-DB TMI-COUPLER WITH REDUCED FABRICATION TOLERANCE SENSITIVITY" JOURNAL OF LIGHTWAVE TECHNOLOGY, IEEE. NEW YORK, US, vol. 10, no. 3, 1 March 1992 (1992-03-01), pages 306-311, XP000272888 ISSN: 0733-8724 * page 306, right hand column, lines 3-10* * figure 1B * | 1 | TECHNICAL FIELDS SEARCHED (Int.Cl.7)  G02B |

-/--

The present search report has been drawn up for all claims

| Place of search | Date of completion of the search | Examiner |
|---|---|---|
| BERLIN | 9 August 2001 | Luck, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 01 10 5257

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MIKIO TSUJI ET AL: "LOW-LOSS DESIGN METHOD FOR A PLANAR DIELECTRIC-WAVEGUIDE BRANCH: EFFECT OF A TAPER OF SERPENTINE SHAPE" IEEE TRANSACTIONS ON MICROWAVE THEORY AND TECHNIQUES, IEEE INC. NEW YORK, US, vol. 39, no. 1, 1991, pages 6-13, XP000174139 ISSN: 0018-9480 * chapter "I. Introduction" * * figure 9 * | 1-3,5, 7-26 | |
| Y,D | WO 97 32228 A (INST MIKROTECHNIK MAINZ GMBH ;PAATZSCH THOMAS (DE); SMAGLINSKI ING) 4 September 1997 (1997-09-04) * claim 1 * * figure 1 * | 4 | |
| A | CHAN H P ET AL: "LOW LOSS WIDE-ANGLE SYMMETRIC Y-BRANCH WAVEGUIDE" ELECTRONICS LETTERS, IEE STEVENAGE, GB, vol. 32, no. 7, 28 March 1996 (1996-03-28), pages 652-654, XP000584164 ISSN: 0013-5194 * figure 1 * | 4 | |
| Y | ICHIRO TANAKA ET AL: "GLASS WAVEGUIDE 1XN BRANCHING DEVICES" IEICE TRANSACTIONS ON COMMUNICATIONS, INSTITUTE OF ELECTRONICS INFORMATION AND COMM. ENG. TOKYO, JP, vol. E75 - B, no. 9, 1 September 1992 (1992-09-01), pages 886-892, XP000321324 ISSN: 0916-8516 * figure 1B * | 6 | TECHNICAL FIELDS SEARCHED (Int.Cl.7) |

-/--

The present search report has been drawn up for all claims

| Place of search | Date of completion of the search | Examiner |
|---|---|---|
| BERLIN | 9 August 2001 | Luck, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 01 10 5257

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | HSU J-M ET AL: "SYSTEMATIC DESIGN OF NOVEL WIDE-ANGLE LOW-LOSS SYMMETRIC Y-JUNCTIONWAVEGUIDES" IEEE JOURNAL OF QUANTUM ELECTRONICS, IEEE INC. NEW YORK, US, vol. 34, no. 4, 1 April 1998 (1998-04-01), pages 673-679, XP000751370 ISSN: 0018-9197 * figure 1A * | 6 | |
| A,D | PATENT ABSTRACTS OF JAPAN vol. 1998, no. 01, 30 January 1998 (1998-01-30) & JP 09 230151 A (FUJIKURA LTD), 5 September 1997 (1997-09-05) * abstract * | 9 | |
| A | VAN DER TOL J J G M ET AL: "A POLARIZATION SPLITTER ON LINBO3 USING ONLY TITANIUM DIFFUSION" JOURNAL OF LIGHTWAVE TECHNOLOGY, IEEE. NEW YORK, US, vol. 9, no. 7, 1 July 1991 (1991-07-01), pages 879-886, XP000241871 ISSN: 0733-8724 * abstract * | 11-26 | TECHNICAL FIELDS SEARCHED (Int.Cl.7) |

The present search report has been drawn up for all claims

| Place of search | Date of completion of the search | Examiner |
|---|---|---|
| BERLIN | 9 August 2001 | Luck, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**EP 1 239 311 A1**

**ANNEX TO THE EUROPEAN SEARCH REPORT
ON EUROPEAN PATENT APPLICATION NO.**                EP 01 10 5257

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2001

| Patent document cited in search report | | Publication date | Patent family member(s) | | Publication date |
|---|---|---|---|---|---|
| JP 09033740 | A | 07-02-1997 | NONE | | |
| WO 9732228 | A | 04-09-1997 | DE 19708812 A | | 30-10-1997 |
| JP 09230151 | A | 05-09-1997 | NONE | | |